# EUROPEAN PATENT SPECIFICATION

(11) **EP 1 498 999 B1**
(45) Date of publication and mention of the grant of the patent: **21.08.2013**
(21) Application number: 04016570.6
(22) Date of filing: 14.07.2004
(51) Int. Cl.: H01M 10/44, H02J 7/00, A47L 9/28, H01M 2/10

(54) **Rechargeable vacuum cleaner system**
Wiederaufladbares Staubsaugersystem
Système aspirateur de poussières rechargeable

(30) Priority: 17.07.2003 JP 2003198203
(43) Date of publication of application: 19.01.2005
(73) Proprietor: Toshiba TEC Kabushiki Kaisha, Tokyo 141-8664 (JP)
(72) Inventor: Ogishima, Takuya Toshiba Tec Kabushiki Kaisha, Tokyo 141-8664 (JP); Kushida, Hiroyuki Toshiba Tec Kabushiki Kaisha, Tokyo 141-8664 (JP)
(74) Representative: Kramer - Barske - Schmidtchen

(56) References cited:
- EP-A2- 1 039 613
- JP-A- 7 250 788
- JP-A- 2001 076 696
- JP-A- 2002 065 535
- US-A- 6 046 908
- US-A1- 2002 043 959
- US-A1- 2002 182 480
- US-B1- 6 345 411
- US-B2- 6 431 302

## Description

### BACKGROUND OF THE INVENTION

### Field of the Invention

The present invention relates to a rechargeable vacuum cleaner system capable of achieving efficiently charge of a battery assembly installed in a vacuum cleaner.

### Description of the Related Art

Conventionally, a various of proposals have been made and practically used with respect to a charger for charging a battery assembly composed of a plurality of rechargeable batteries, which is contained in a body case of a vacuum cleaner.

When such a battery assembly is charged, it should be noted in particular that, in view of increase in temperature of the battery assembly in excess, charge of the battery assembly is forbidden under a state in which a temperature of the battery assembly is high. Therefore, a conventional rechargeable vacuum cleaner includes a thermistor for measuring a temperature of the battery assembly, and a charge controlling means adapted not to perform the charge of the battery assembly when the temperature of the battery assembly measured by the thermistor is out of a charge permissible temperature region, for example, 0°C to 50 °C and to initiate the charge of the battery assembly when the temperature of the battery assembly is in the charge permissible temperature region.

In the rechargeable vacuum cleaner having the thermistor and the charge controlling means, the temperature of the battery assembly often exceeds an upper limit of the charge permissible temperature region, even though the charge of the battery assembly is attempted to perform immediately after an operation of the vacuum cleaner is stopped. Accordingly, the charge controlling means must be structured to wait the charge of the battery assembly until the temperature of the battery assembly is lowered to the upper limit of the charge permissible temperature region. Heat radiation of the battery assembly is insufficient, because it is contained in a housing, there is a problem that the charge of the battery assembly cannot be initiated throughout a long time, by waiting until the temperature of the battery assembly drops to the upper limit of the charge permissible temperature region through a permissible heat radiation.

Consequently, a technology configured to drop a high temperature of the battery assembly promptly and to lessen a waiting time until the charge of the battery assembly is permissible has been proposed as disclosed in a patent document, for example, Japanese Patent Laid-Open 2002-65535 forming the preamble of claim 1.

According to the invention disclosed in the patent document, when a rechargeable electric vacuum cleaner is combined to a charger or an AC adaptor body in order to charge a battery assembly, there is provided an air trunk which is configured to communicate insides of the charger and the vacuum cleaner, and at an intermediate portion of which the battery assembly is disposed. The charger is provided with a blower and by driving the blower, cooling air flows through the air trunk and the battery assembly is forcibly cooled by the cooling air.

However, in the invention as disclosed in the above patent document, the air trunk through which the cooling air flows to cool the battery assembly must be provided within both the charger and the vacuum cleaner and therefore a structure of the vacuum cleaner is complex.

The vacuum cleanser becomes a large in size because the air trunk is formed within the vacuum cleaner and therefore this adversely affects consumer's demand for miniaturization of entire home electric appliances.

Furthermore, in the charger, a blower for cooling other than a mechanism for charge and various mechanisms accompanying to the blower must be provided and therefore there is a problem that the charger becomes a large size and is expensive.

US 6 345 411 B1 discloses a vacuum cleaner.

EP 1 039 613 A2 discloses a battery charger.

US 2002/0182480 A1 discloses an electrical energy storage pack.

### SUMMARY OF THE INVENTION

It is, therefore, an object of the present invention to provide a rechargeable vacuum cleaner system capable of dropping promptly a temperature of a battery assembly to an upper limit of a charge permissible temperature range by a simple structure, and reducing a waiting time for charging, if the temperature of the battery assembly exceeds the upper limit of the charge permissible temperature range at the time of charging the battery assembly.

To attain the aforementioned object, a rechargeable vacuum cleaner system according to an aspect of the present invention comprises a vacuum cleaner having a body case, a storage chamber provided in said body case, the storage chamber having an opening, a battery assembly housed in the storage chamber through the opening, a heat transfer wall configured to constitute a portion of the storage chamber, a temperature-detecting element for detecting a temperature of the battery assembly, a charger to charge the battery assembly and including a charging stage, and a charge-controlling part provided in the charging stage to control charge of the battery assembly.

A resilient member is provided in said storage chamber to thermally couple the battery assembly with the heat transfer wall.

The charger includes a heat transmission part which constitutes a portion of the charging stage and which has a heat transmitting surface.

The heat transfer wall of the storage chamber is thermally connected to the heat transmission surface of the heat transmission part of the charger and a circuit including the charge-controlling part for charging the battery assembly is established between the vacuum cleaner and the charger when the vacuum cleaner is coupled with the charging stage of the charger.

The charge-controlling part is configured to control a charge current of the battery assembly based on a comparison of a temperature of the battery assembly detected by the temperature-detecting element with a predetermined charge permissible temperature range during the charge of the battery assembly.

### BRIEF DESCRIPTION OF THE DRAWINGS

Fig. 1 is a perspective view showing one embodiment of a rechargeable electric vacuum cleaner system according to the present invention;
Fig. 2 is a partial perspective view of a backward portion of a bottom surface of a vacuum cleaner showing a portion of a storage chamber of a battery assembly, provided in the vacuum cleaner shown in Fig.1;
Fig. 3A is a perspective view showing the battery assembly;
Fig. 3B is a view showing an arrangement relationship between the battery assembly and a heat transfer wall for the storage chamber;
Fig. 3C is a sectional view showing a structure of the battery assembly;
Fig. 3D is a plan view of a thermistor installed in the battery assembly;
Fig. 4A is an exploded perspective view showing the storage chamber of the battery assembly, provided in the vacuum cleaner shown in Fig.1, with viewing from outside;
Fig. 4B is a perspective view showing the heat transfer wall;
Fig. 5 is a perspective view showing an arrangement state of the battery assembly and the storage chamber;
Fig. 6A is a perspective view showing a structure of the storage chamber of the battery assembly, provided in the vacuum cleaner shown in Fig.1;
Fig. 6B is a vertical cross-sectional view showing the battery assembly housed in the storage chamber;
Fig. 7 is a partial perspective view of the vacuum cleaner shown in Fig.1, showing a portion of a terminal for charging;
Fig. 8 is a perspective view showing a state in which the vacuum cleaner is combined to a charger shown in Fig.7 in order to charge the battery assembly;
Fig. 9A is a view showing one embodiment of a circuit showing a charging circuit and a charge-controlling part, to charge the battery assembly;
Fig. 9B is a view showing another embodiment of a circuit showing a charging circuit and a charge-controlling part, to charge the battery assembly.
Fig. 10 is a flow chart for explaining a charging operation;
Fig. 11 is a perspective view showing a heat emitting mechanism provided on the charger;
Fig. 12 is a perspective view showing a state in which the vacuum cleaner is mounted on a charger of a vertically mounted charge system, in a rechargeable vacuum cleaner system in another embodiment of the present invention;
Fig. 13 is a perspective view showing schematically a contact assisted mechanism used in the vertically mounted charge system in the rechargeable vacuum cleaner system shown in Fig.12;
Fig. 14 is a perspective view showing a charger on which the contact-assisting mechanism is provided;
Fig. 15 is a perspective view showing a lower structure of a body case of an electric vacuum cleaner, contacting with a contacting member of the contact -assisting mechanism;
Fig. 16 is a perspective view showing still another embodiment of an electric vacuum cleaner used in embodying the present invention; and
Fig. 17 is a schematic view showing another embodiment of the storage chamber in which the battery chamber is housed provided on the body case.

### DETAILED DESCRIPTION OF PREFERRED EMBODIMENTS

Several embodiments of the present invention will be explained with reference to the accompanying drawings.

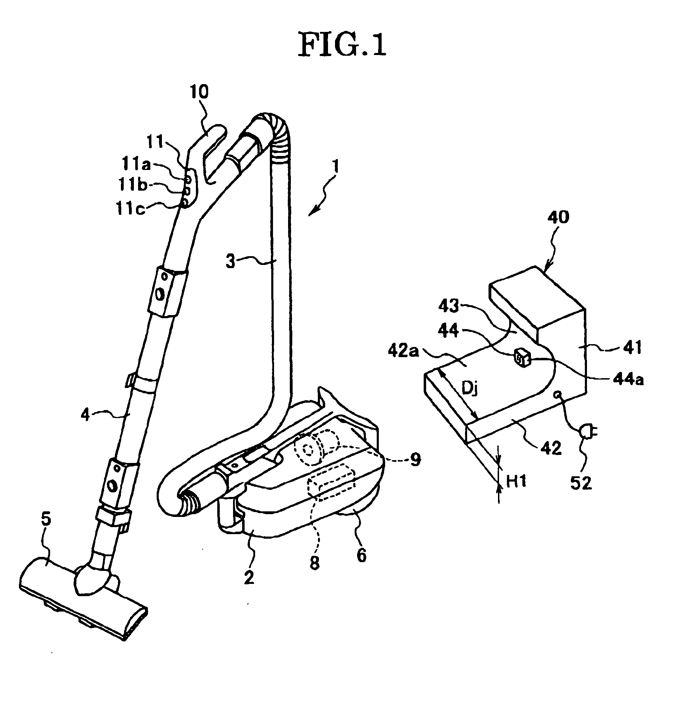

Referring now to Figs.1 to 7, a structure of a vacuum cleaner 1 of a rechargeable vacuum cleaner system according to the present invention will be explained.

The vacuum cleaner 1 comprises a body case 2, a horse 3 detachably attached on the body case, an extension tube 4 connected removably with a leading end portion of the horse 3, and a suction nozzle 5 detachably attached on a leading end portion of the extension tube 4, as shown in Fig. 1.

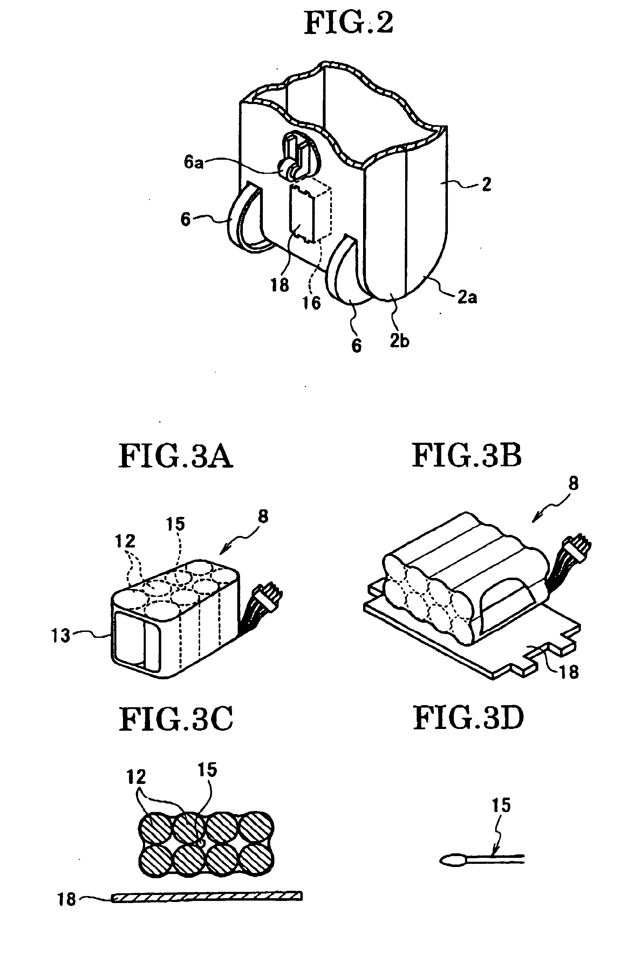

The body case 2 is provided at a backward portion of a bottom surface thereof with a pair of running wheels 6 which are located parallel to each other and at a forward portion of the bottom surface thereof with a running wheel 6a (see Fig. 2).

Contained within the body case 2 are a battery assembly 8 and an electric blower 9 driven by the battery assembly 8 as a power source (see Fig. 1). A structure of the battery assembly 8 and a structure for containing it will be described hereinafter.

The horse 3 is connected with the body case 2 so that a base end of the horse 3 is communicated through a dust chamber (not shown) with a suction side of the electric blower 9. Provided on a leading end portion of the horse 3 and in the vicinity of a position, at which the extension tube 4 is connected, are a gripping portion 10 for an operator, which is branched from the horse 3 backwardly, and an operation means 11 disposed in a region operable with lingers of the operator gripping the gripping portion 10 (see Fig.1).

The operation means 11 acting as an ON/OFF switch of the electric blower 9 is configured to be capable of selecting and setting a plurality of operation modes to control the blower 9 in different operating states.

More specifically, an operation button 11a for setting a stop of the blower 9, an operation button 11b for setting a low driving of the blower 9, and an operation button 11c for setting a high driving of the blower 9 are arranged in a line from the gripping portion 10 toward the extension tube 4.

The battery assembly 8 is composed of a plurality of rechargeable battery cells 12 such as nickel-cadmium, nickel-hydride and lithium-ion batteries, which are cylindrical in shape, for example, and a heat shrinkable tube 13 for covering and combining the plurality of battery cells 12 into one unit, as shown in Fig. 3A.

It is preferable to form the battery assembly 8 by combining rechargeable battery cells whose temperature characteristic and a capacity are respectively uniform. In the embodiment, the battery assembly 8 is structured by eight rechargeable battery cells, which are adequately arranged in parallel four by four.

Fig. 3B illustrates a relationship of arrangement between the battery assembly 8 and a heat transfer wall 18 for constituting a portion of a storage chamber 16 in which the battery assembly is contained.

Fig. 3C illustrates an example in which a temperature-detecting element 15 for detecting a temperature of the battery assembly 8 is disposed in a gap between adjacent battery cells 12. The temperature-detecting element 15 comprises, for example, a thermistor 15 as shown in Fig. 3D. The thermistor 15 may be provided in one gap or a plurality of gaps of the battery assembly 8.

When the plurality pf rechargeable battery cells 12 are suitably arranged and electrically connected, and then the thermistor 15 is disposed in one gap, for example, the connected rechargeable battery cells 12 and the thermistor 15 are packaged in one unit by application of heat on the heat shrinkable tube 13. Consequently, the battery assembly 8 for the vacuum cleaner is electrically insulated by means of the tube 13.

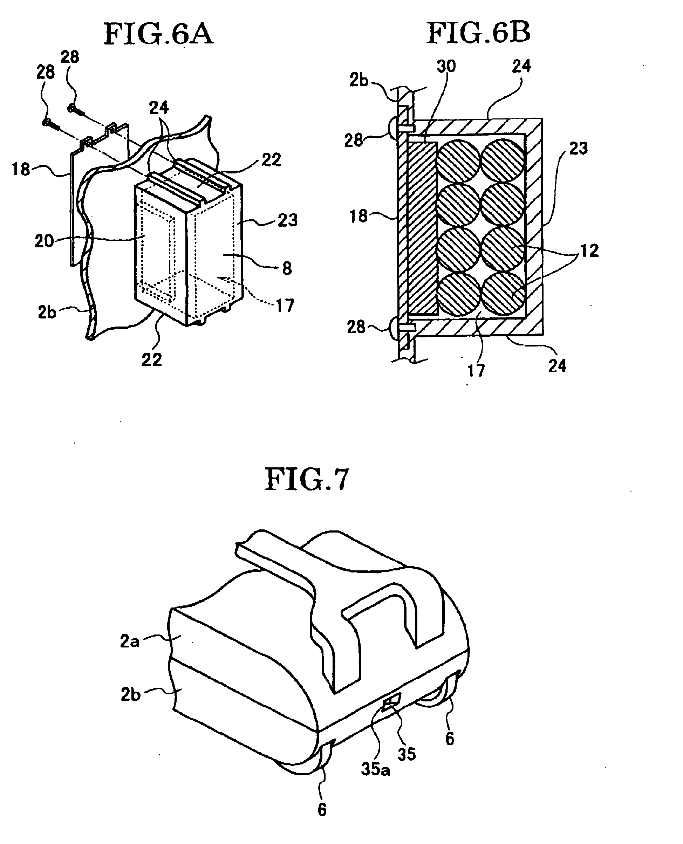

As shown in Fig. 7, a rear end of the body case 2 is provided with a terminal for electrically coupling the battery assembly 8 to a charger.

As shown in Fig. 2, the body case 2 is composed of an upper case 2a and a lower case 2b. The storage chamber 17 for containing the battery assembly 8 is provided, for example, in the lower case 2b of the body case 2. The storage chamber 17 includes a generally rectangular shaped opening 19 formed on the lower case 2b to access to the inside of the storage chamber 17 therethrough.

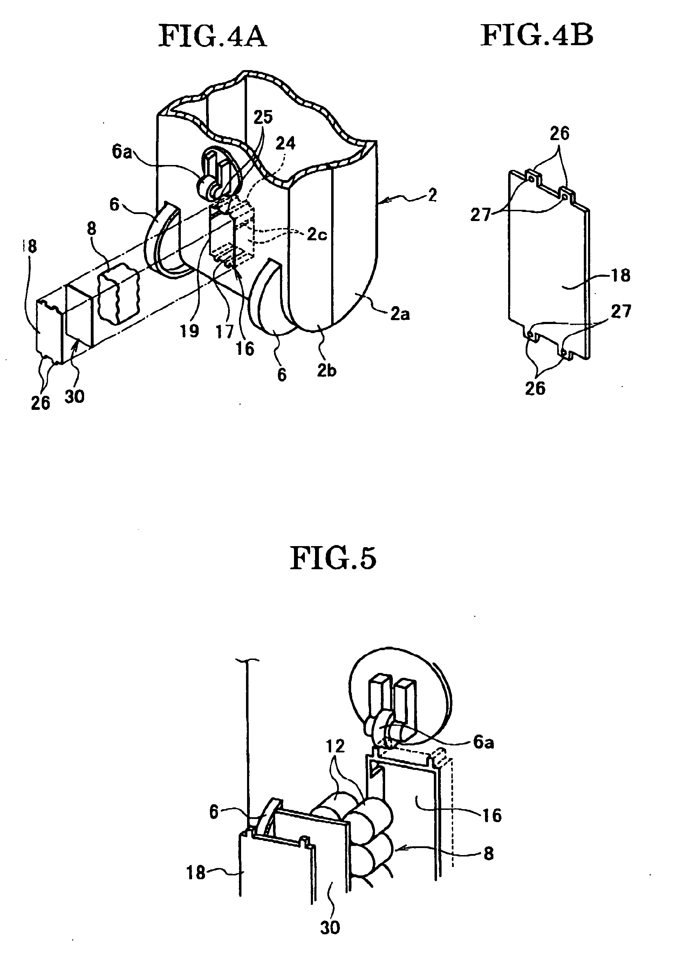

The storage chamber 17 is composed of a heat transfer wall 18, a pair of fixed side plates 20, a pair of side walls 22 and a bottom wall 23, as shown in Fig. 6A The pair of fixed side plates 20, the pair of side walls 22 and the bottom wall 23 define the storage chamber 17. The heat transfer wall 18 is detachably fixed to the lower case 2b to close the rectangular shaped opening 19 so that the battery assembly 8 housed in the chamber 17 is taken out through the opening 19. Each outer surface of the pair of side walls 22 of the storage chamber 17 is provided with a pair of protrusions 24, extending in parallel from the lower case 2b side, in which threaded holes 25 are respectively provided at the edge thereof facing the opening 19. On the other hand, the heat transfer wall 18 is provided at each of opposite edges corresponding to the pair of protrusions 24 with projecting ear portions 26, in which through holes 27 are respectively provided as shown in Fig. 4B.

Consequently, the heat transfer wall 18 is fixed to the lower case 2b (see Fig.6) by screws 28, the through holes 27 and the threaded holes 25 as shown in Fig. 4A.

The heat transfer wall 18 is made of a material having a high thermal conductivity in comparison with materials of the fixed side plates 20, the side walls 22 and the bottom wall 23. For example, if the material of the fixed side plates 20 is a foam material having a low density and the material of each of the side walls 22 and the bottom wall 23 which are integrally formed with the lower case 2b is ABS resin, a resin material to which metallic powder having heat conductivity higher than that of the ABS resin is mixed or a metal material of aluminum or a magnesium alloy is used for the heat transfer wall 18.

Moreover, in this embodiment, although each of the side walls 22 and the bottom wall 23 is formed as one portion of the lower case 2b, the lower case 2b, the side walls 22 and the bottom wall 23 my be formed separately.

Furthermore, a resilient member 30 is provided at least in either a side of the battery assembly 8 contained in the storage chamber 17 facing with the heat transfer wall 18 fixed to the lower case 2b or the opposite side of the battery assembly 8 away from the heat transfer wall 18. The resilient member 30 acts to cause the battery assembly 8 to always contact with the heat transfer wall 18 under a pressure.

The resilient member 30 is formed, for example, by a sheet shaped member and made of a natural or synthetic rubber or the like in which a predetermined amount of carbon filler having heat conductivity and resilience is contained, as shown in Fig.4A. Meanwhile, the resilient member 30 may be disposed separately from the heat transfer wall 18, or fixed on an inner surface of the heat transfer wall 18, previously. In addition, when the battery assembly 8 is disposed in the storage chamber 17, the rechargeable battery cells 12 in the battery assembly 8 are arranged, as shown in Fig. 5.

Meanwhile, if the resilient member 30 is disposed in the opposite side to the heat transfer wall 18 via the battery assembly 8, it constituted with, for example, a metallic plate spring, a metallic coil spring, a foam body of nature rubber or a foam body of synthetic rubber or the like.

As shown in Fig. 6A and 6B, as the screws 28 are fastened, a pressed force of contacted portions among the battery assembly 8, the resilient member 30 and the heat transfer wall 18 becomes strong and therefore a strong thermal connection between the battery assembly 8 and the heat transfer wall 18 can be obtained. In other words, a heat resistance between the battery assembly 8 and the heat transfer wall 18 is minimized.

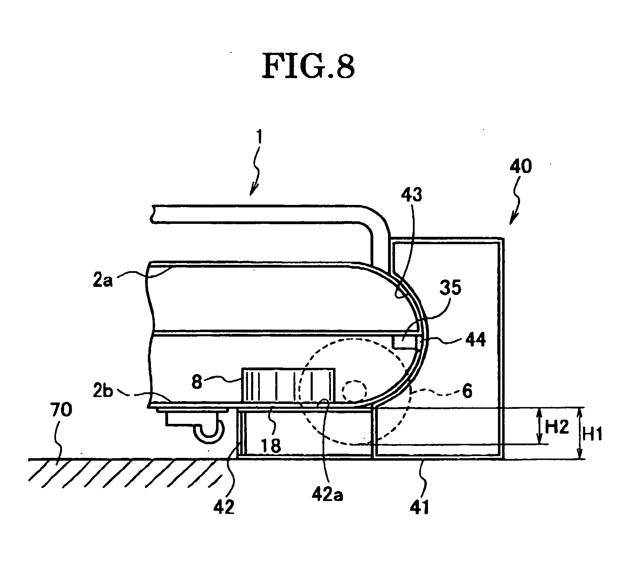

Subsequently, a charger 40 and a positional relationship between the charger 40 and the vacuum cleaner 1 when charging will be explained referring to Figs. 1, 8 and 9.

The charger 40 as shown in Fig.1 is configured to charge the battery assembly 8 in a horizontal state to a direction of movement of the body case 2, that is to say, with a transverse mounted charging system.

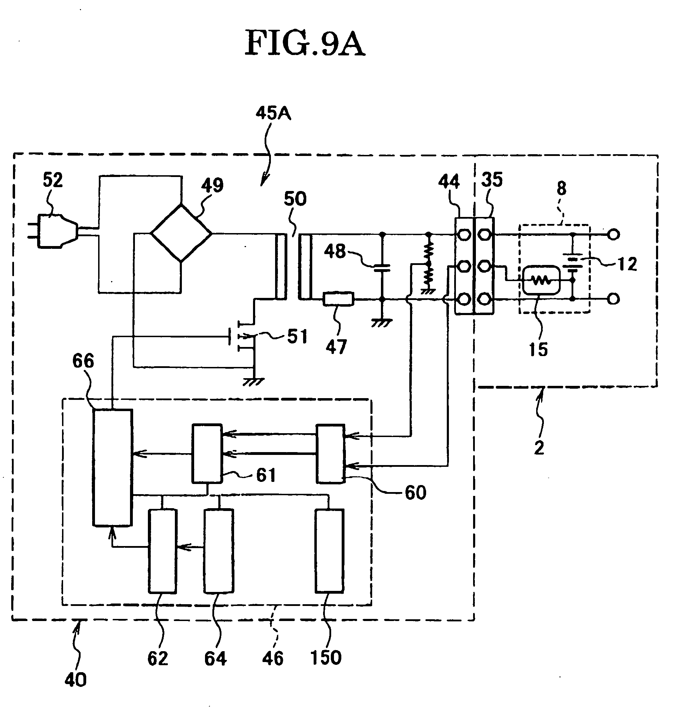

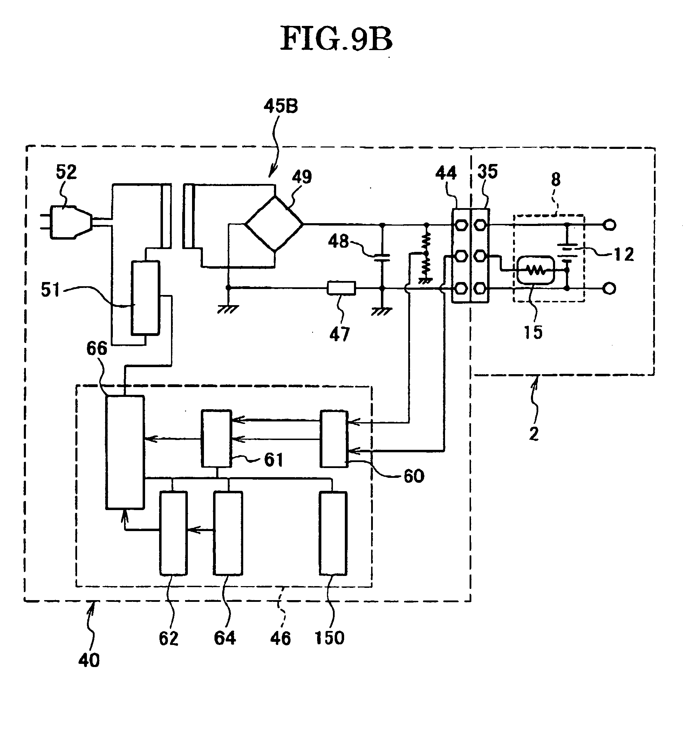

The charger 40 includes a charging stage 41 of a generally L character shape in section, a transmission part 42 which is disposed downwardly of the charging stage 41 and which is configured to mount the body case 2 thereon, a containing portion 43 for containing a backward part of the body case 2 when the body case 2 is mounted on the transmission part 42, a terminal 44 for charging, of the charger side, a charging circuit 45A or 45B (see Figs. 9A and 9B) connected with the terminal 44, and a charging-control part 46 (see Figs. 9A and 9B) for controlling the charging circuit 45A or 45B.

The charging terminal 35 in the body case side of the vacuum cleaner 1 is connected with the charging terminal 44 in the charger side. In addition, a terminal opening 35a (see Fig. 7) of the charging terminal 35 in the body case side and a terminal opening 44a (see Fig. 1) of the charging terminal 44 in the charger side also operate to align a position of the body case 2 and the charger 40.

A magnet (not shown) is disposed on a periphery of each of the terminal openings 35a and 44a to enhance reliability of connection of the terminals 35 and 44.

The heat transmission part 42 is one portion of the charging stage 41 and is formed generally in a rectangular solid, whose upper portion is provided with a flat heat transmitting surface 42a. When the body case 2 is combined on the charger 40 in order to charge the battery assembly 8, the heat transfer wall 18 connected thermally with the battery assembly 8 (see Fig. 2) is surface-contacted with the heat transmitting surface 42a.

Here, a distance H1 from an installation surface, floor, 70 to the heat transmitting surface 42a is set to be large than a distance H2 from a surface of the heat transfer wall 18 to a lower surface of the wheels 6 or the wheel 6a so that the heat transfer wall 18 and the heat transmitting surface 42a are surface-contacted with respect to each other.

In addition, a width Dj of the transmission part 42 of the charger 40 is set to be small than a space Ds of the wheels 6. Accordingly, the body case 2 is disposed on the heat transmission part 42 in such a manner that the heat transmission part 42 is inserted between the wheels 6 and when the body case 2 is lied on the heat transmission part 42, the wheels 6 and 6a are in a floating state from the installation surface 70. Consequently, the body case 2 is mounted on the heat transmission part 42 by an own weight of the body case, at this time, the beat transfer wall 18 is surface-contacted with the heat transmitting surface 42a.

Here, it should be noted that the connection of the charging terminals 44 and 35 is designed with a degree of three-dimensional freedom in order to prioritize the surface-contact of the heat transfer wall 18 and the heat transmitting surface 42a.

A material of the heat transmission part 42 has preferably heat conductivity equal or more than that of a material of the heat transfer wall 18. For example, a resin material to which metallic powder having heat conductivity higher than that of the ABS resin is mixed or a metal material of aluminum or a magnesium alloy is suitable for the material of the heat transmission part 42.

Moreover, the heat transmission part 42 has preferably a heat capacity absorbing a degree of heat of the battery assembly 8 and a volume of the heat transmission part 42 is previously designed in accordance with the number of the rechargeable battery cells 12 and the operation of the vacuum cleaner 1.

In the charging state as described above, because the battery assembly 8 is connected thermally with the heat transfer wall 18 by means of the resilient member 30, heat of the battery assembly 8 is radiated promptly to the heat transmission part 42 through the heat transmitting surface 42a.

Meanwhile, the heat transmission part 42 may be formed integrally with the charging stage 41 or formed separately from the charging stage and then the separately formed heat transmission part 42 may be fixed to the charging stage 41.

Moreover, in the embodiment, although the heat transmission part 42 is formed generally in a rectangular solid, it may be formed in any shapes if it is possible to surface-contact the heat transmission part 42 with the heat transfer wall 18. For example, the heat transfer wall 18 and heat transmitting surface 42a are not flat together and may be formed in concave and convex shapes respectively which are fitted with respect to each other.

Next, a method for controlling the charge will be explained referring to Figs. 9A and 9B.

A charging circuit 45A shown in Fig. 9A comprises a reactor 47, a condenser 48, an insulating part 50 such as a transformer, a switching part or element 51, a commutative part 49 and an AC inputting part 52, which are connected with respect to each other and with the charging terminal 44 of the charger side. The charging circuit 45A is configured to control a charge current by commutating and isolating a commercial AC power source, and inputting a signal into the switching part 51. When the battery assembly 8 is separated from the charging circuit 46A, a power of the battery assembly 8 is supplied to the electric blower 9 (see Fig.1).

A charge-controlling part 46 for controlling the charging circuit 45A is mainly composed of a microcomputer and has a detecting part 60 connected with charging terminal 44 of the charger side to detect a charge voltage and a temperature of the battery assembly 8, a compare part 61 connected with the detecting part 60, an abnormal-state detecting part 62, a signal generation/outputting part 66 for generating a signal and outputting it to the switching part 51, and a memory 150 such as a ROM and a RAM or the like.

The charge-oontrolling part 46 monitors the voltage and temperature of the battery assembly 8 charged by the charging circuit 45A when charging. An output voltage from the thermistor 15 and a battery voltage at the time of charging are compared as a predetermined value in the memory 150 at the compare part 61 and then a signal is fed from the signal generation/outputting part 66 to the switching part 51 based on the aforementioned compared results.

The switching part 51 comprises, for example, an element such as a transistor, FET, thyristor or the like. In addition, the signal to the switching part 51 uses, for example, a PWM signal and the charge current is controlled according to a magnitude of duty of the PWM signal.

When the temperature of he battery assembly 8 is monitored, the temperature of the battery assembly 8 is detected through the thermistor 15, and a control is made by a program stored in the memory 150, in which if the detected temperature is out of a charge permissible temperature region pre-stored in the memory 150, for example, 0°C to 55°C, the charge is stopped, whereas if the detected temperature is within the charge permissible temperature region, the charge is initiated.

Moreover, a charging circuit 45B shown in Fig.9B differs from the charging circuit 45A in that the switching part 51 is provided at a primary side of the insulating part 50 and the AC inputting part 52 is connected through the insulating part 50 and the switching part 51 with an inputting side of the commutative part 49, and in the other points the charging circuit 45B is the same as the charging circuit 45A.

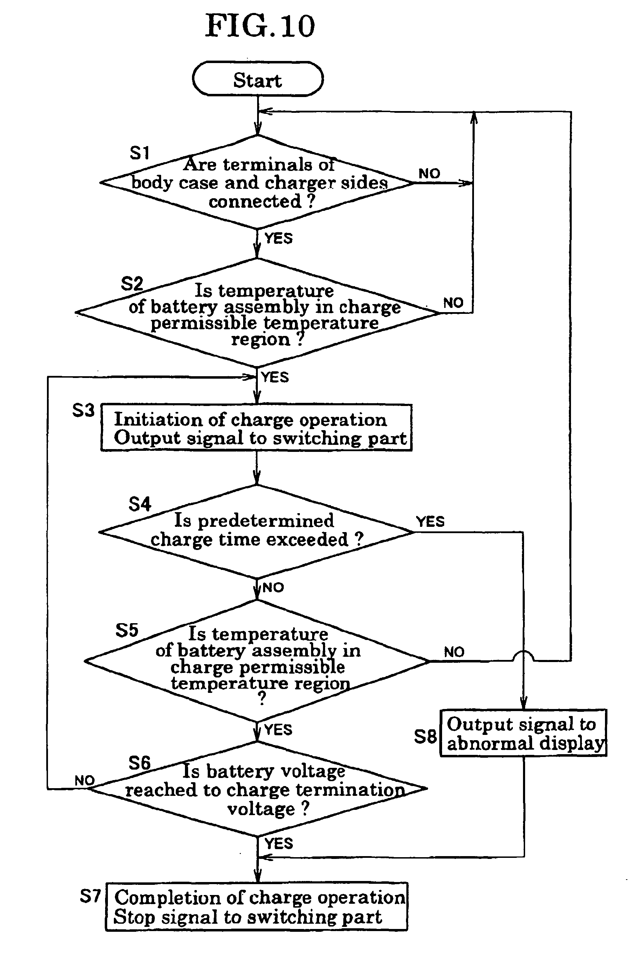

Subsequently, a series of charge controlling operations by the charge-controlling part 46 at the time the body case 2 is combined with the charger 40 in order to charge the battery assembly 8 will be explained based on a flow chart shown in Fig. 10.

Whether or not the charging terminal 35 of the body case side and the charging terminal 44 of the charger side are connected is first judged based on a detected value of the battery voltage from the detecting part 60 (step S1). If the charging terminals 35 and 44 are connected, whether or not a temperature of the battery assembly 8 is in the charge permissible temperature region is judged based on a detected value of temperature from the thermistor 15 (step S2). If the temperature of the battery assembly 8 is out of the charge permissible temperature region, a charging operation is not initiated. During waiting the charging operation, the heat resistance between the battery assembly 8 and the heat transmission part 42 becomes small to form a heat-emitting path, whereby promoting reduction of temperature of the battery assembly 8.

In the step S2, if it is judged that the temperature of the battery assembly 8 is in the charge permissible temperature region, a signal is outputted from the charge-controlling part 46 to the switching part 51 and then the charging circuited 45 is operated to initiate the charge of the battery assembly 8 (step S3).

During operating of the charge, a length of time of charging the battery assembly 8 is measured by a timer 64, further a detection of each of the temperature and voltage of the battery assembly 8 is periodically performed by the thermistor 15. The measurement of the length of charging time by the timer 64 is handled as abnormal charging state detection (step S4). When the charge is not completed if the charging time exceeds a length of time pre-stored in the memory 150, it is judged that the charge is abnormal and then a signal is outputted to a display (not shown) such as an LED or the like (step S8) to inform such abnormal state to a user.

Whether or not the temperature of the battery assembly 8 is in the charge permissible temperature region as pre-stored in the memory 150, in other words, whether or not the temperature of the battery assembly 8 is out of the charge permissible temperature region by the charging operation is judged periodically based on the detected value from the thermistor 15 (step S5). Furthermore, whether or not the charge of the battery assembly 8 is completed, in other words, whether or not the battery voltage is reached to a charge termination voltage pre-stored in the memory 150 is judged based on a detected value from the detecting part 60 (step S6).

If the temperature of the battery assembly 8 is out of the charge permissible temperature region, the charging operation is stopped once for safety, and then the step is returned to the waiting state of charging operation (step S1). Moreover, if the voltage of the battery assembly 8 is reached to the charge termination voltage, it is judged that the charge operation is completed, and then the charge operation is terminated (step S7).

After the termination of charge, the body case 2 is removed from the charger 40 to separate the charging terminal 35 of the body case side from the charging terminal 44 of the charger side. Consequently, it is possible to restart immediately cleaning or sweeping by the vacuum cleaner 1.

In this way, the present invention makes it possible to lessen the heat resistance between the battery assembly 8 and the heat transmission part 42, to form the heat-emitting path and to promote the reduction of the temperature of the battery assembly 8.

As a result, it is possible to shorten a time coming in a charge permissible temperature, which is capable of charging safe, after stopping the cleaning operation of the vacuum cleanser 1. According to the present invention, the structure is simple, and miniaturization of the system of the present invention is easy.

Furthermore, at the time of a rapid charging operation in which the duty of the PWM signal outputted from the signal generation/outputting part 66 is large and therefore the charge current of the charging circuit 45 is large, the temperature of the battery assembly 8 is elevated than that in the time of charging operation by the normal charge current, but as described above, the elevation of temperature of the battery assembly 8 is reduced by means of the heat-emitting path between the battery assembly 8 and the transmission part 42.

In addition, the storage chamber 17 for containing the battery assembly 8 is disposed in an intermediate portion among the pair of running wheels 6 provided backward of the bottom surface of the body case 2 and one wheel 6a provided forward of the bottom surface of the body case 2, to operate as a positional guide of the storage chamber relative to the heat transmission part by the pair of wheels, as shown in Fig. 2. With the disposition, the heat transfer wall 18 is surrounded by means of the pair of wheels 6 and the wheel 6a. Accordingly, the pair of wheels 6 and the wheel 6a are available to perform alignment of the body case 2 and the charger 40 when they are combined and therefore accuracy of alignment between the heat transmission part 42 and the heat transfer wall 18 is achieved, as a result, the heat emitting of the battery assembly 8 can be promoted. More specifically, when charging the battery assembly 8, the body case 2 is moved backward toward a position of combination with the charger 40 by use of the wheels 6 and 6a and the body case 2 is disposed on the heat transmission part 42 in such a manner that the wheels 6 straddle the heat transmission part 42, and then the charging terminals 35 and 44 are connected.

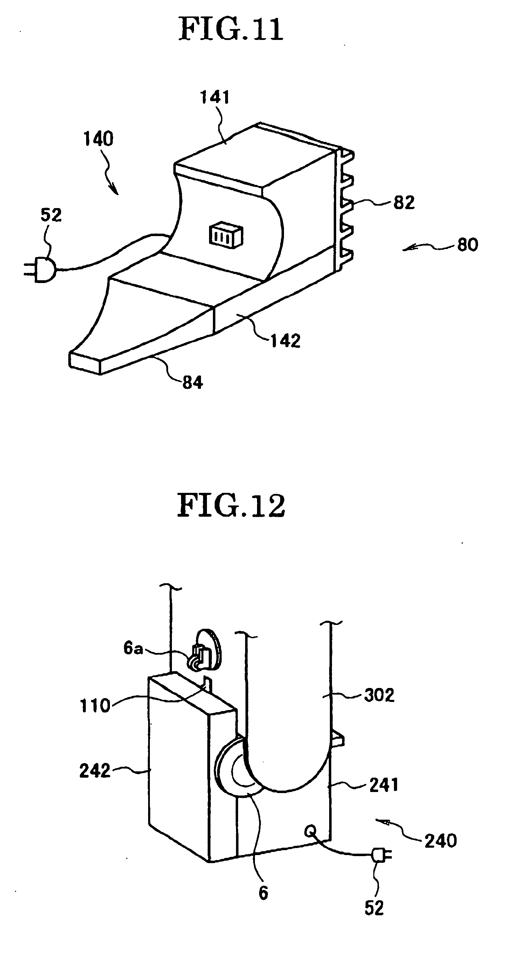

A charger 140 in the other embodiment includes a heat-emitting structure 80. The heat-emitting structure 80 has heat-radiating fins 82 attached on a back surface of a charging stage 141, as shown in Fig. 11. The heat-radiating fins 82 are formed directly on the charging stage 141 or a previously formed fin body having fins is attached on the charging stage 141. Moreover, the heat-radiating fins 82 and a heat transmission part 142 may be directly contacted or combined through an adhesive or a sheet material having good heat conductivity.

By providing the heat-emitting structure 80 structured as described above on the charging stage 141, the heat of the heat transmission part 42 transmitted from the battery assembly 8 is transmitted to the heat-radiating fins 82 and then the heat can be emitted promptly from the heat-radiating fins 82 to the atmosphere.

Meanwhile, in a modified example, the heat-radiating fins 82 may be provided inside of the charging stage 141. In this case, it is preferable to provide a heat-emitting hole (not shown) in a wall of the charging stage 141 in the vicinity of the heat-radiating fins 82.

Moreover, the charger 141 is provided at leading end of the heat transmission part 142 with a guide 84 for the wheels. The alignment of the heat transfer wall 18 and the heat transmission part 42 is easy by moving the body case 2 along the guide 84 for the wheels.

The thermistor 15 is disposed in a gap between adjacent cells of the plurality of rechargeable battery cells 12 constituting the battery assembly 8 and inside the cell (s) 12 arranged in the vicinity of the heat transfer wall 18, as shown in Fig. 3C.

For example, the rechargeable battery cell (s) disposed in the vicinity of the heat transfer wall 18, of the rechargeable battery cells 12 constituting the battery assembly 8 is relatively promptly cooled and has a large temperature gradient. On the other hand, a cooling speed of the rechargeable battery cells 12 disposed inwardly of the battery assembly 8 is slow than that of the cell (s) in the vicinity of the heat transfer wall 18 and has a small temperature gradient. Therefore, it is possible to enhance safety and temperature-detecting accuracy by placing the thermistor 15 in a portion in which cooling is late and the temperature gradient is less.

In case of the battery assembly 8 composed of eight rechargeable battery cells 12 in the embodiment as shown in Fig. 3, it is desirable that a temperature sensing part of the thermistor 15 is disposed in a gap of a central portion in the battery assembly 8 to contact with rechargeable battery cells 12. The thermistor 15 is disposed in one portion or a plurality of portions in which cooling is late and temperature gradient is lass. If the thermistor is disposed in the plurality of positions, it is possible to enhance more accuracy of temperature detection.

A rechargeable vacuum cleaner system in another embodiment of the present invention will be explained referring to Figs. 12 to 15. In Figs. 12 to 15, the same reference numerals as in the aforementioned first embodiment are to the same parts.

In another embodiment, a charger 240 is formed into a longitudinally mounted charging system for charging the battery assembly 8 by vertically placing the body case 2.

The charger 240 is provided with a circular containing portion 243 for containing a backward portion of a body case 302 and a heat transmission part 242 projected from the containing portion 243 for heat-emitting the battery assembly 8, similarly as in the above first embodiment.

Here, a contact-assisting mechanism 100 provided in the charging stage 142 will be first explained.

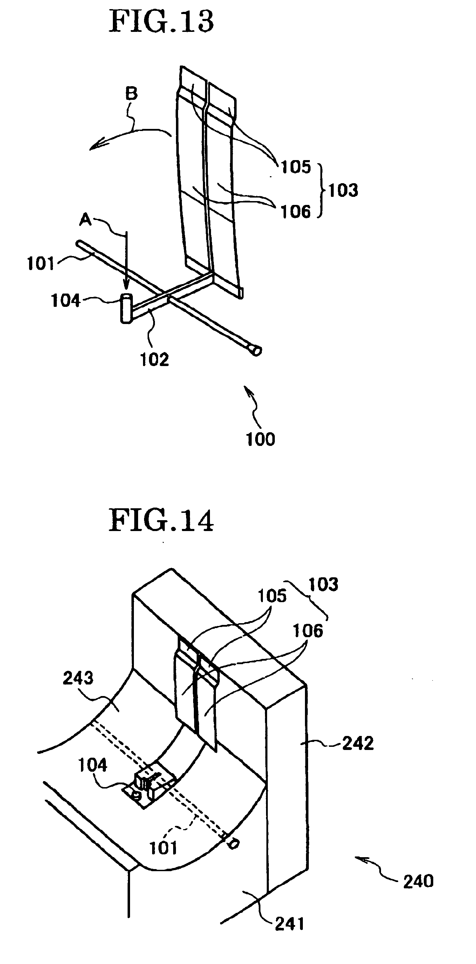

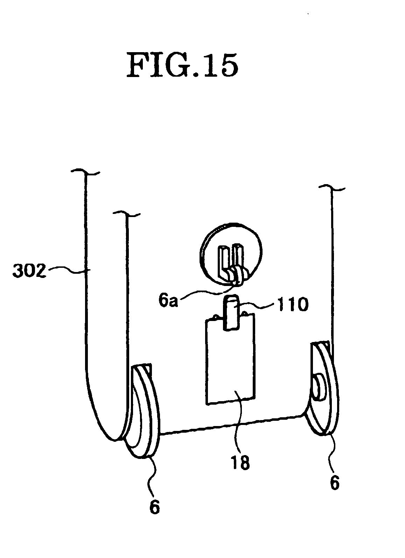

The contact-assisting mechanism 100 is provided in the charging stage 242 to be capable of contacting with the heat transfer wall 18 of the body case 302 (see Fig.15) when charging the battery assembly 8, as shown in Fig.13. The contact-assisting mechanism 100 includes a fixed shaft 101 fixed to the charging stage 242, a link 102 disposed perpendicularly to the fixed shaft 101 and attached rotatably to the fixed shaft, a contacting member 103 fixed to one end of the link 102, and a force applying member 104 fixed to the other end of the link 102. The contacting member 103 is formed from one vertically extending rectangular member comprising a charger contacting part 105 and a body case contacting part 106.

The fixed shaft 101 is fixed in the charging stage 242 at a downward position of a bottom surface of the containing portion to position transversely the generally circular containing portion 243 of the charging stage 242.

The charge contacting part 105 and the body case contacting part 106 in the contacting member 103 are disposed sideward of the bottom surface of the containing portion 243, that is to say, at a side surface of the heat transmission part 242 and at a position facing the heat transfer wall 18, the force applying member 104 is disposed downwardly of the bottom surface of the containing portion 43. The charger contacting part 105, the body case contacting part 106 and the force applying member 104 is disposed in the charger to expose from the bottom surface of the containing portion 243.

When a force is applied to the force applying member 104 in a direction shown by arrow A in Fig. 13, the link 102 is rotated counterclockwise about the fixed shaft 101, and the contacting member 103 is rotated counterclockwise as shown by arrow B in accordance with the rotation of the link. Meanwhile, if the force in the arrow A direction applied to the force applying member 104 is removed, the contacting member 103 is rotated clockwise about the fixed shaft 101.

Here, it should be noted that the contacting member 103 is structured and is attached to the charging stage 242 in such a manner that the body case contacting part 106 only is moved and the charger contacting part 105 remains contacted with the heat transmission part 42, when the contacting member 103 is rotated in the arrow B direction.

The force applying member 104 is made of, for example, from a resin material and the contacting member 103 is made of a material having heat conductivity and resilience, for example, a metallic plate spring. A size of the contacting member 103 is set to cover approximately the heat transfer wall 18.

Next, an operation of the present invention will be explained referring to Figs. 14 and 15.

When the body case 302 is set in the containing portion 243, the body case 302 presses the force applying member 104, accordingly, the contacting member 103 is rotated toward the heat transfer wall 18, as described above and the body case contacting part 106 of the contacting member 103 is contacted under a pressure with the heat transfer wall 18. At this time, the charger contacting member 105 of the contacting member 103 remains contacted with the heat transmission part 42, as described above.

Next, a pressure biasing means 110 provided on the body case 302 will be explained.

As shown in Fig.15, provided on the bottom surface of the body case 302 are the pressure biasing means 110 as well as the heat transfer wall 18 and the running wheel 6a. The pressure biasing means 110 is provided in an intermediate portion between the heat transfer wall 18 of the body case 302 and the wheel 6a and is formed of a thin material than a diameter of the wheel 6a. The pressure biasing means 110 is also structured so that it can be rotated 90° in either right direction or left direction, once, when the heat transfer wall 18 is removed from the body case to exchange the battery assembly 8. However, the pressure biasing means 110 is in a position shown in Fig. 15 when using usually, and it does not adversely affect usual cleaning.

Subsequently, a relationship between the contact-assisting mechanism 100 provided in the charging stage 242 and the pressure biasing means 110 provided on the body case 302 will be explained.

When the body case 302 is dropped down toward the charging stage 242, the charger contacting part 105 exposed from the containing portion 243 is pressured toward the charging stage 242 because the pressure biasing means 110 is provided on the body case 302.

Thereafter, when the body case 302 is further dropped toward the containing portion 243, the body case 302 presses the force applying member 104. Consequently, a force in the same direction as the arrow A in Fig. 13 is applied to the contact-assisting mechanism 100. Therefore, a contact region between the body case contacting part 106 of the contacting member 103 and the heat transfer wall 18 is generated. At this time, the charger contacting part 105 remains contacted with the heat transfer part 242. Consequently, heat of the battery assembly 8 is radiated to the heat transmission part 242 through the heat transfer wall 18 of the storage chamber, the body case contacting part 106, and charger contacting part 105.

With the aforementioned structure, the heat resistance between the battery assembly 8 and the heat transmission part 242 becomes small and the heat generated in the battery assembly 8 is transmitted efficiently from the heat transfer wall 18 to the heat transmission part 242 and therefore the temperature of the battery assembly 8 can be promptly dropped.

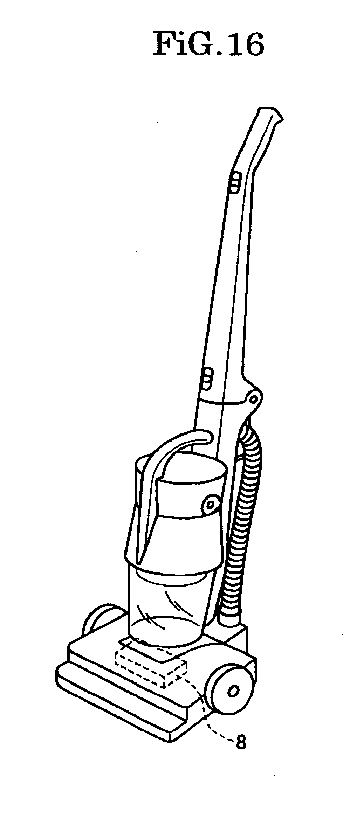

In the above embodiments, the case that the present invention is applied to the vacuum cleaner 1 of so called canister type has been described, the present invention can be applied to a vertical or upright type vacuum cleaner, as shown in Fig. 16, similarly.

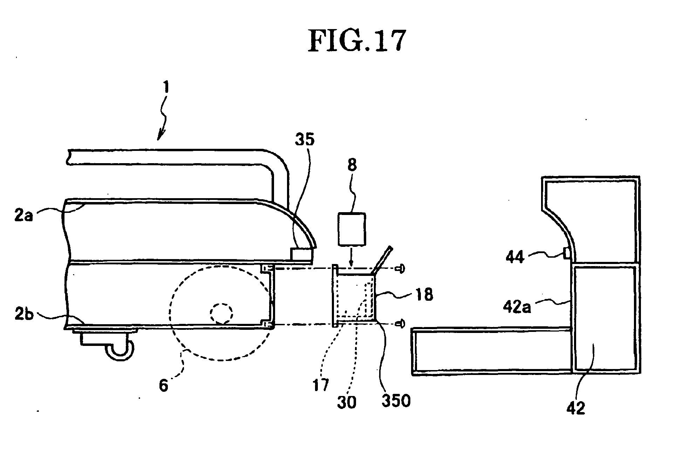

In the above-described embodiments, although an example that the storage chamber 17 which houses the battery assembly 8 is integrally formed with the body case2 is described, other embodiment will be described referring to Fig. 17. The storage chamber 350 is detachably mounted on the body case 2b. After the battery assembly 8 is housed in the storage chamber 350, the storage chamber 350 is mounted on the body case 2b. In this case, the heat transfer wall 18 constituting a part of the storage chamber 350 is thermally coupled with the heat transmitting surface 42a of the heat transmission part 42 of the charger when charging the battery assembly 8.

## Claims

1. A rechargeable vacuum cleaner system, comprising:
a vacuum cleaner (1) having a body case (2);
a storage chamber (17) provided in said body case (2), the storage chamber (17) having an opening (19);
a battery assembly (8) housed in said storage chamber (17) through the opening (19);
a temperature-detecting element (15) for detecting a temperature of said battery assembly (8);
a charger (40, 140, 240) to charge the battery assembly (8) and including a charging stage (41, 141, 241); and
a charge-controlling part (46) provided in the charging stage (41, 141, 241) to control charge of the battery assembly (8),
**characterized in that**
the system further comprises a heat transfer wall (18) configured to constitute a portion of said storage chamber (17), and made of a material having a high thermal conductivity in comparison with the material of the rest of the storage chamber (17),
a resilient member (30) is provided in said storage chamber (17) thermally couple the battery assembly (8) with the heat transfer wall (18),
said charger includes a heat transmission part (42, 142, 242) which constitutes a portion of the charging stage (41, 141, 241) and which has a heat transmitting surface (42a) having a heat conductivity equal to or more than that of the material of the heat transfer wall (18);
said heat transfer wall (18) of the storage chamber (17) is thermally connected to and surface-contacted with the heat transmission surface (42a) of the heat transmission part (42, 142, 242) of the charger (40, 140, 240) and a circuit (45A, 45B) including the charge-controlling part for charging the battery assembly (8) is established between the vacuum cleaner (1) and the charger (40, 140, 240) when the vacuum cleaner (1) is coupled with the charging stage (41, 141, 241) of the charger (40, 140, 240), and
said charge-controlling part (46) is configured to control a charge current of the battery assembly (8) based on a comparison of a temperature of the battery assembly (8) detected by the temperature-detecting element (15) with a predetermined charge permissible temperature range during the charge of the battery assembly (8).

2. The rechargeable vacuum cleaner system according to claim 1, **characterized in that** the body case (2) includes an upper case (2a) and a lower case (2b) and **characterized in that** the opening (19) of the storage chamber (17) is opened at the lower case (2b) and is closed by the heat transfer wall (18).

3. The rechargeable vacuum cleaner system according to claim 1, **characterized in that** the body case (2) includes an upper case (2a) and a lower case (2b) and **characterized in that** the storage chamber (17) is detachably mounted on the lower case (1b).

4. The rechargeable vacuum cleaner system according to claims 1 or 2,
**characterized in that**
said vacuum cleaner (1) includes a pair of running wheels (6) provided on the body case (1) for moving on a floor to be cleaned, the pair of running wheels (6) is arranged in parallel to one another so that the opening (19) of the storage chamber (17) is located between the pair of running wheels (6),
said heat transfer wall (18) faces the floor when the vacuum cleaner (1) is used, and
said pair of running wheels (6) guides a thermally connection between the heat transfer wall (18) of the storage chamber (17) and the heat transmitting surface (42a) of the heat transmission part (42) of the charger (40) when the vacuum cleaner (1) is coupled with the charging stage 41 of the charger (40).

5. The rechargeable vacuum cleaner system according to claim 4, **characterized in that** the heat transmission surface (42a) of the heat transmission part (42) of the charger 40 is located in parallel to the floor with a distance and the distance is set so that a weight of the vacuum cleaner (1) is charged on the heat transmission surface (42a) when the vacuum cleaner (1) is coupled with the charging stage (41) of the charger (40).

6. The rechargeable vacuum cleaner system according to any one of claims 1, 4 and 5, **characterized in that** the battery assembly (8) is composed of a plurality of rechargeable battery cells (12) and **characterized in that**
said temperature-detecting element (15) is disposed in a space between mutually adjacent battery cells (12) and is further disposed at an inner location in the storage chamber (17) compared with the battery cell (12) adjoining to the heat transfer wall (18) when the battery assembly (8) is housed in the storage chamber (17).

7. The rechargeable vacuum cleaner system according to claim 1,
**characterized in that**
said charging stage (141) of the charger (140) is provided with heat-radiating fins (82) thermally coupled with the heat transmission part (142) of the charging stage (141).

8. The rechargeable vacuum cleaner system according to any one of claims 1, 4, 5, 6 and 7 **characterized by** comprising a contact-assisting mechanism (100) for assisting the thermal contact between the heat transfer wall (18) and the heat transmitting surface of the heat transmission part (242) when the vacuum cleaner (1) is coupled with the charging stage (241) of the charger (240).

## Patentansprüche

1. Wiederaufladbares Staubsaugersystem, enthaltend:
einen Staubsauger (1), der ein Körpergehäuse (2) aufweist;
eine Speicherkammer (17), die in dem Körpergehäuse (2) bereitgestellt ist, wobei die Speicherkammer (17) eine Öffnung (19) enthält;
eine Batterieanordnung (8), die über die Öffnung (19) in der Speicherkammer (17) untergebracht ist;
ein Temperaturdetektionsbauteil (15) zum Detektieren einer Temperatur der Batterieanordnung (8);
einen Lader (40, 140, 240) zum Aufladen der Batterieanordnung (8), und der einen Ladeabschnitt (41, 141, 241) enthält; und
ein Ladesteuerungsteil (46), das in dem Ladeabschnitt (41, 141, 241) bereitgestellt ist zum Steuern des Ladens der Batterieanordnung (8), **dadurch gekennzeichnet, dass**
das System ferner enthält:
eine Wärmeübertragungswand (18), die konfiguriert ist zum Bilden eines Bereichs der Speicherkammer (17), und die aus einem Material gebildet ist, das eine hohe thermische Leitfähigkeit im Vergleich zu dem Material des Rests der Speicherkammer (17) aufweist;
ein elastisches Bauteil (30), das in der Speicherkammer (17) bereitgestellt ist, zum thermischen Koppeln der Batterieanordnung (8) mit der Wärmeübertragungswand (18),
der Lader ein Wärmeübertragungsteil (42, 142, 242) enthält, das einen Bereich des Ladeabschnitts (41, 141, 241) bildet, und das eine Wärmeübertragungsfläche (42a) hat, die eine Wärmeleitfähigkeit aufweist, die gleich oder besser ist als die des Materials der Wärmeübertragungswand (18);
die Wärmeübertragungswand (18) der Speicherkammer (17) thermisch verbunden und in Oberflächenkontakt ist mit der Wärmeübertragungsfläche (42a) des Wärmeübertragungsteils (42, 142, 242) des Laders (40, 140, 240), und eine Schaltung (45A, 45B), die das Ladesteuerungsteil zum Laden der Batterieanordnung (8) enthält, gebildet ist zwischen dem Staubsauger (1) und dem Lader (40, 140, 240), wenn der Staubsauger (1) mit dem Ladeabschnitt (41, 141, 241) des Laders (40, 140, 240) gekoppelt ist, und
das Ladesteuerungsteil (46) konfiguriert ist zum Steuern eines Ladestroms der Batterieanordnung (8) basierend auf einem Vergleich einer Temperatur der Batterieanordnung (8), die durch das Temperaturdetektionsbauteil (15) detektiert wird, mit einem vorbestimmten Ladezulässigkeitstemperaturbereich während des Ladens der Batterieanordnung (8).

2. Wiederaufladbares Staubsaugersystem nach Anspruch 1, **dadurch gekennzeichnet, dass** das Körpergehäuse (2) ein oberes Gehäuse (2a) und eine unteres Gehäuse (2b) enthält, und **dadurch gekennzeichnet ist, dass** die Öffnung (19) der Speicherkammer (17) an dem unteren Gehäuse (2a) offen ist und durch die Wärmeübertragungswand (18) geschlossen ist.

3. Wiederaufladbares Staubsaugersystem nach Anspruch 1, **dadurch gekennzeichnet, dass** das Körpergehäuse (2) ein oberes Gehäuse (2a) und ein unteres Gehäuse (2b) enthält, und **dadurch gekennzeichnet ist, dass** die Speicherkammer (17) abnehmbar an dem unteren Gehäuse (2b) montiert ist.

4. Wiederaufladbares Staubsaugersystem nach Anspruch 1 oder 2, **dadurch gekennzeichnet, dass**
der Staubsauger (1) ein Paar von Laufrädern (6) enthält, die an dem Körpergehäuse (2) bereitgestellt sind, zum Bewegen auf einem zu reinigenden Boden, wobei das Paar von Laufrädern (6) parallel zueinander derart angeordnet ist, dass die Öffnung (19) der Speicherkammer (17) sich zwischen dem Paar von Laufrädern (6) befindet,
die Wärmeübertragungswand (18) zu dem Boden weist, wenn der Staubsauger (1) verwendet wird, und
das Paar von Laufrädern (6) eine thermische Verbindung zwischen der Wärmeübertragungswand (18) der Speicherkammer (17) und der Wärmeübertragungsfläche (42a) des Wärmeübertragungsteils (42) des Laders (40) führt, wenn der Staubsauger (1) mit dem Ladeabschnitt (41) des Laders (40) gekoppelt ist.

5. Wiederaufladbares Staubsaugersystem nach Anspruch 4, **dadurch gekennzeichnet, dass** die Wärmeübertragungsfläche (42a) des Wärmeübertragungsteils (42) des Laders (40) sich parallel mit einem Abstand zu dem Boden befindet, und der Abstand derart eingestellt ist, dass ein Gewicht des Staubsaugers (1) auf der Wärmeübertragungsfläche (42a) lastet, wenn der Staubsauger (1) mit dem Ladeabschnitt (41) des Laders (40) gekoppelt ist.

6. Wiederaufladbares Staubsaugersystem nach einem der Ansprüche 1, 4 und 5, **dadurch gekennzeichnet, dass** die Batterieanordnung (8) aus einer Mehrzahl von wiederaufladbaren Batteriezellen (12) gebildet ist, und **dadurch gekennzeichnet, dass**
das Temperaturdetektionsbauteil (15) in einem Raum zwischen zueinander benachbarten Batteriezellen (12) angeordnet ist, und ferner in der Ladekammer (17) innen liegend angeordnet ist, verglichen mit der Batteriezelle (12), die an der Wärmeübertragungswand (18) angrenzt, wenn die Batterieanordnung (8) in der Speicherkammer (17) untergebracht ist.

7. Wiederaufladbares Staubsaugersystem nach Anspruch 1, **dadurch gekennzeichnet, dass** der Ladeabschnitt (141) des Laders (140) mit Wärmeabstrahllamellen (82) bereitgestellt ist, die thermisch gekoppelt sind mit dem Wärmeübertragungsteil (142) des Ladeabschnitts (141).

8. Wiederaufladbares Staubsaugersystem nach einem der Ansprüche 1, 4, 5, 6 und 7, **gekennzeichnet durch** einen Kontaktunterstützungsmechanismus (100) zum Unterstützen des thermischen Kontakts zwischen der Wärmeübertragungswand (18) und der Wärmeübertragungsfläche des Wärmeübertragungsteils (242), wenn der Staubsauger (1) mit dem Ladeabschnitt (241) des Laders (240) gekoppelt ist.

## Revendications

1. Système d'aspirateur rechargeable, comprenant:
un aspirateur (1) comprenant une enceinte de corps (2);
une chambre de stockage (17) prévue dans ladite enceinte de corps (2), la chambre de stockage (17) comportant une ouverture (19);
un ensemble de batterie (8) qui est logé dans ladite chambre de stockage ((17) à travers l'ouverture (19);
un élément de détection de température (15) pour détecter une température dudit ensemble de batterie (8);
un chargeur (40, 140, 240) pour charger l'ensemble de batterie (8) et comprenant un étage de charge (41, 141, 241); et
une partie de commande de charge (46) qui est prévue dans l'étage de charge (41, 141, 241) afin de commander la charge de l'ensemble de batterie (8),
**caractérisé en ce que**:
le système comprend en outre une paroi de transfert de chaleur (18) qui est configurée de manière à constituer une partie de ladite chambre de stockage (17), et qui est constituée d'un matériau qui présente une conductivité thermique élevée comparativement au matériau du reste de la chambre de stockage (17);
un élément élastique (30) est prévu dans ladite chambre de stockage (17) afin de coupler thermiquement l'ensemble de batterie (8) à la paroi de transfert de chaleur (18);
ledit chargeur comprend une partie de transmission de chaleur (42, 142, 242) qui constitue une partie de l'étage de charge (41, 141, 241) et qui présente une surface de transmission de chaleur (42a) dont la conductivité thermique est égale ou supérieure à celle du matériau de la paroi de transfert de chaleur (18);
ladite paroi de transfert de chaleur (18) de la chambre de stockage (17) est connectée thermiquement à et est en contact de surface avec la surface de transmission de chaleur (42a) de la partie de transmission de chaleur (42, 142, 242) du chargeur (40, 140, 240), et un circuit (45A, 45B) comprenant la partie de commande de charge pour charger l'ensemble de batterie (8) est établi entre l'aspirateur (1) et le chargeur (40, 140, 240) lorsque l'aspirateur (1) est couplé à l'étage de charge (41, 141, 241) du chargeur (40, 140, 240), et
ladite partie de commande de charge (46) est configurée de manière à commander un courant de charge de l'ensemble de batterie (8) sur la base d'une comparaison entre une température de l'ensemble de batterie (8) détectée par l'élément de détection de température (15) et une plage de températures de charge acceptables prédéterminée pendant la charge de l'ensemble de batterie (8).

2. Système d'aspirateur rechargeable selon la revendication 1, **caractérisé en ce que** l'enceinte de corps (2) comprend une enceinte supérieure (2a) et une enceinte inférieure (2b), et **caractérisé en ce que** l'ouverture (19) de la chambre de stockage (17) est ouverte à l'enceinte inférieure (2b) et est fermée par la paroi de transfert de chaleur (18).

3. Système d'aspirateur rechargeable selon la revendication 1, **caractérisé en ce que** l'enceinte de corps (2) comprend une enceinte supérieure (2a) et une enceinte inférieure (2b), et **caractérisé en ce que** la chambre de stockage (17) est montée de façon détachable sur l'enceinte inférieure (2b).

4. Système d'aspirateur rechargeable selon la revendication 1 ou 2, **caractérisé en ce que**:
ledit aspirateur (1), comprend une paire de roues de roulement (6) prévues sur l'enceinte de corps (2) afin de se déplacer sur un sol à nettoyer, les roues de la paire de roues de roulement (6) étant disposées parallèlement l'une à l'autre de telle sorte que l'ouverture (19) de la chambre de stockage (17) soit située entre la paire de roues de roulement (6);
ladite paroi de transfert de chaleur (18) est située en face du plancher pendant l'utilisation de l'aspirateur (1); et
ladite paire de roues de roulement (6) guide une connexion thermique entre la paroi de transfert de chaleur (18) de la chambre de stockage (17) et la surface de transmission de chaleur (42a) de la partie de transmission de chaleur (42) du chargeur (40) lorsque l'aspirateur (1) est couplé à l'étage de charge (41) du chargeur (40).

5. Système d'aspirateur rechargeable selon la revendication 4, **caractérisé en ce que** la surface de transmission de chaleur (42a) de la partie de transmission de chaleur (42) du chargeur (40) est agencée parallèlement au plancher avec une certaine distance, ladite distance étant définie de telle sorte qu'un poids de l'aspirateur (1) soit chargé sur la surface de transmission de chaleur (42a) lorsque l'aspirateur (1) est couplé à l'étage de charge (41) du chargeur (40).

6. Système d'aspirateur rechargeable selon l'une quelconque des revendications 1, 4 et 5, **caractérisé en ce que** l'ensemble de batterie (8) est composé d'une pluralité de cellules de batterie rechargeables (12), et **caractérisé en ce que** ledit élément de détection de température (15) est disposé dans un espace entre des cellules de batterie mutuellement adjacentes (12), et est en outre disposé à un emplacement intérieur dans la chambre de stockage (17) comparativement à la cellule de batterie (12) qui est contiguë à la paroi de transfert de chaleur (18) lorsque l'ensemble de batterie (8) est logé dans la chambre de stockage (17).

7. Système d'aspirateur rechargeable selon la revendication 1, **caractérisé en ce que** ledit étage de charge (141) du chargeur (140) est pourvu d'ailettes de rayonnement de chaleur (82) qui sont couplées thermiquement à la partie de transmission de chaleur (142) de l'étage de charge (141).

8. Système d'aspirateur rechargeable selon l'une quelconque des revendications 1, 4, 5, 6 et 7, **caractérisé en ce qu'**il comprend un mécanisme d'assistance au contact (100) pour assister le contact thermique entre la paroi de transfert de chaleur (18) et la surface de transmission de chaleur de la partie de transmission de chaleur (242) lorsque l'aspirateur (1) est couplé à l'étage de charge (241) du chargeur (240).
